# FASCICULE DE BREVET EUROPEEN

(11) **EP 2 564 451 B1**
(45) Date de publication et mention de la délivrance du brevet: **30.07.2014**
(21) Numéro de dépôt: 11715522.6
(22) Date de dépôt: 18.04.2011
(51) Int. Cl.: H01M 2/10, H01M 2/20, H01M 2/26, H01M 10/02, H01M 10/48

(54) **ENSEMBLE ACCUMULATEUR POUR BATTERIE DE VEHICULE ELECTRIQUE OU HYBRIDE**
BATTERIEEINHEIT FÜR EIN ELEKTRO- ODER HYBRIDFAHRZEUG
BATTERY UNIT FOR AN ELECTRIC OR HYBRID VEHICLE

(30) Priorité: 28.04.2010 FR 1053292
(43) Date de publication de la demande: 06.03.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: JOYE, Olivier, F-63040 Clermont-Ferrand Cedex 9 (FR)
(74) Mandataire: Roussy, Delphine
(86) Numéro de dépôt international: PCT/EP2011/056145
(87) Numéro de publication internationale: WO 2011/134826

(56) Documents cités:
- WO-A2-2010/081704
- US-A- 5 674 641

## Description

La présente invention concerne le domaine des ensembles accumulateurs pour batterie de véhicule électrique ou hybride, notamment de véhicule automobile.

Par « véhicule électrique automobile », on entend un véhicule tel que défini dans le règlement N°100 des Nations Unies concernant l'homologation des véhicules électriques à batterie.

La présente invention concerne plus particulièrement un ensemble accumulateur comprenant une pluralité d'éléments accumulateurs d'énergie électrique superposés et reliés mécaniquement. Une batterie est formée d'un ou plusieurs ensembles accumulateurs et constitue la source d'énergie électrique utilisée pour la motorisation électrique du véhicule électrique ou hybride.

La demande de brevet US 2006/0204840 décrit un ensemble accumulateur formé d'un empilement alternatif d'éléments accumulateurs d'énergie et de plaques de rigidification. Des flasques de fixation sont prévus pour enserrer les éléments accumulateurs et les plaques. Ces flasques comportent des oreilles pour le passage de tiges filetées coopérant avec des écrous pour obtenir un ensemble unitaire.

On connaît également, par la demande de brevet US 2009/0017367, un ensemble accumulateur comprenant une pluralité d'éléments accumulateurs empilés les uns contre les autres, deux flasques de fixation aux extrémités de l'empilement, et des poutres de rigidification s'étendant transversalement entre les flasques et comportant des logements adaptés pour recevoir les extrémités des éléments accumulateurs. L'ensemble comporte également des tiges filetées et des écrous associés pour fixer les poutres et maintenir assemblé l'empilement d'éléments accumulateurs.

Dans cet ensemble accumulateur, une platine de connexion électrique est prévue entre les électrodes positive et négative associées des éléments accumulateurs adjacents. L'électrode positive est montée à l'intérieur d'un trou ménagé sur la platine de connexion et ensuite soudée sur celle-ci. La fixation de l'électrode négative à la platine est réalisée par vissage. Ces opérations sont longues et onéreuses.

On connaît également, par le brevet US 5,674,641, un ensemble accumulateur comprenant une pluralité d'éléments accumulateurs d'énergie électrique superposés, des entretoises disposées axialement entre les électrodes de connexion des éléments accumulateurs, des tiges de fixation s'étendant axialement à travers des évidements des électrodes de connexion et des entretoises, et des flasques d'extrémités supérieures et inférieures coopérant avec les tiges pour assembler les électrodes de connexion et les entretoises.

On connaît encore, par le document WO 2006/068373, un ensemble accumulateur comprenant une pluralité d'éléments accumulateurs empilés et montés à l'intérieur d'un boîtier de réception réalisé en deux parties. Les électrodes de connexion des éléments accumulateurs comportent des évidements pour permettre le passage de tiges filetées et une fixation desdites tiges sur la partie inférieure du boîtier. Des entretoises isolantes sont disposées axialement entre les électrodes de connexion des éléments accumulateurs adjacents. Ces entretoises supportent des plaques de connexion électrique reliant les électrodes des éléments accumulateurs.

Lors du montage de ces ensembles accumulateurs, un mauvais plaquage des électrodes de connexion et des moyens disposés axialement entre les électrodes peut aboutir à une défaillance dans la circulation du courant électrique.

Par ailleurs, dans certaines conditions de roulage du véhicule, les vibrations auxquelles sont soumis de tels ensembles accumulateurs peuvent provoquer une rupture du contact électrique entre les moyens disposés axialement entre les électrodes et lesdites électrodes. Ceci engendre également un défaut dans la fourniture du courant.

La présente invention a pour but de remédier aux inconvénients précités.

Plus particulièrement, la présente invention vise à prévoir un ensemble accumulateur facile à fabriquer, à monter et présentant une bonne fiabilité de fonctionnement.

La présente invention vise également à prévoir un ensemble accumulateur dans lequel le maintien de la connexion électrique entre les électrodes des éléments accumulateurs d'énergie est assuré.

Dans un mode de réalisation, l'ensemble accumulateur comprend une pluralité d'éléments accumulateurs d'énergie électrique superposés selon un axe d'empilage et comprenant chacun des électrodes de connexion, des entretoises disposées axialement entre au moins certaines des électrodes de connexion des éléments accumulateurs, et des tirants d'assemblage s'étendant axialement à travers des évidements des électrodes de connexion et des entretoises. L'ensemble comprend en outre des flasques d'extrémité coopérant avec les tirants d'assemblage pour enserrer axialement les électrodes de connexion et les entretoises, et des moyens de précontrainte élastiques coopérant avec au moins un des flasques d'extrémité pour exercer des efforts axiaux de précontrainte sur les électrodes de connexion et d'entretoises empilées axialement.

Les moyens de précontrainte permettent d'exercer une précontrainte axiale sur les électrodes de connexion et les entretoises empilées afin de maintenir un contact axial entre elles et d'assurer une bonne connexion électrique entre les différents éléments accumulateurs, et ce, même lorsque l'ensemble accumulateur est soumis à des vibrations. Les moyens de précontrainte exercent un effort permanent de précontrainte afin de conserver une pression de contact uniforme sur l'empilage axial d'électrodes de connexion et d'entretoises. Par ailleurs, les moyens de précontrainte permettent de compenser d'éventuelles variations dimensionnelles des entretoises et/ou électrodes de connexion dues à des variations thermiques.

Les moyens de précontrainte sont avantageusement distincts des tirants d'assemblages et des flasques d'extrémité.

Les moyens de précontrainte peuvent être montés axialement entre une partie des tirants d'assemblage et le ou les flasques d'extrémité correspondants. A chaque tirant d'assemblage peut être associé un ou plusieurs moyens de précontrainte empilés axialement.

Avantageusement, les moyens de précontrainte sont disposés axialement entre une tête des tirants d'assemblage et le flasque d'extrémité correspondant.

De préférence, les moyens de précontrainte comprennent chacun au moins une rondelle élastique annulaire à élasticité axiale.

Dans un mode de réalisation, les entretoises sont disposées axialement entre les électrodes de connexion des éléments accumulateurs adjacents.

L'ensemble accumulateur comprend des entretoises conductrices électriquement. Il peut également comprendre des entretoises isolantes.

Dans un mode de réalisation, les éléments accumulateurs d'énergie électrique sont montés de manière à disposer alternativement les électrodes positives et négatives de connexion le long de l'axe d'empilage de sorte qu'une électrode positive d'un élément accumulateur soit axialement adjacente d'une électrode négative d'un élément accumulateur adjacent. Les entretoises isolantes et conductrices peuvent être agencées pour connecter en série la pluralité d'éléments accumulateurs. Les électrodes de connexion positives et négatives peuvent être disposées alternativement le long de l'axe d'empilage d'un élément accumulateur à un autre élément axialement adjacent.

Alternativement, il est également possible de prévoir un montage en parallèle des éléments accumulateurs en alignant respectivement les électrodes positives et négatives le long de l'axe d'empilage et en montant les entretoises de façon adaptée.

Les entretoises isolantes comportent de préférence une base contre laquelle vient en appui au moins une électrode de deux éléments accumulateurs axialement adjacents, et une extension en contact avec une enveloppe extérieure d'au moins un desdits éléments accumulateurs.

Les entretoises isolantes peuvent s'étendre au moins en partie en saillie par rapport aux électrodes de connexion et aux entretoises conductrices du côté opposé aux éléments accumulateurs.

Dans un mode de réalisation, les entretoises conductrices comportent chacune un évidement à l'intérieur duquel est branchée une fiche de connexion reliée à un câble électrique pour une mesure de tension.

Des manchons d'isolation sont avantageusement prévus pour le montage des tirants d'assemblage à travers les évidements des électrodes de connexion et des entretoises.

Dans un mode de réalisation, les tirants d'assemblage comportent une partie mâle comportant une tige filetée et une tête de serrage, et une partie femelle comportant une portion de montage à l'intérieur de laquelle est vissée la tige filetée et une tête d'appui en contact contre un des flasques d'extrémité.

Avantageusement, l'ensemble comprend des moyens de maintien en position des éléments accumulateurs qui sont distincts des tirants d'assemblage.

Des moyens d'isolation peuvent être prévus pour isoler individuellement les éléments accumulateurs d'énergie électrique. Ces moyens comprennent de préférence une bande isolante continue serpentant entre les éléments accumulateurs de manière à recouvrir au moins deux faces opposées de chaque élément.

La présente invention sera mieux comprise à la lecture de la description détaillée d'un mode de réalisation pris à titre d'exemple nullement limitatif et illustré par les dessins annexés, sur lesquels :
- la figure 1 est une vue éclatée en perspective d'un ensemble accumulateur selon un exemple de réalisation de l'invention, et
- la figure 2 est une vue assemblée en perspective de l'ensemble de la figure 1.

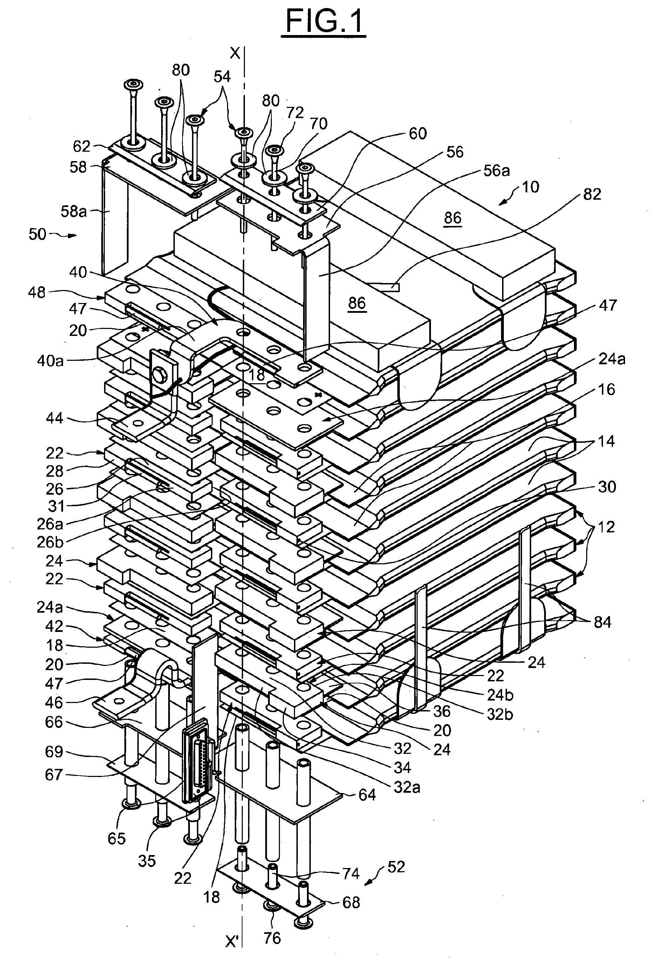

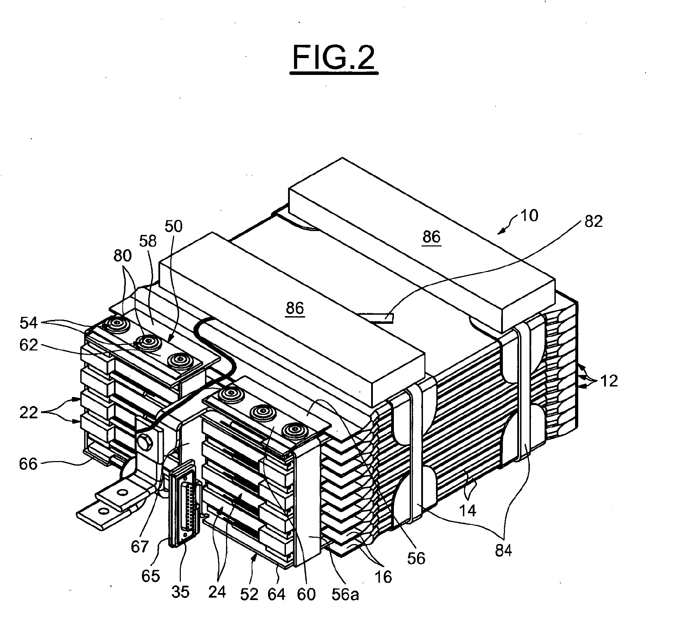

Sur les figures 1 et 2, on a représenté un exemple de réalisation d'un ensemble accumulateur 10 comprenant une pluralité de cellules ou éléments accumulateurs 12 d'énergie électrique superposés le long d'un axe X-X' d'empilage supposé vertical.

Les éléments accumulateurs 12 sont identiques entre eux et se présentent sous forme de plaques rectangulaires. Ils sont empilés axialement les uns relativement aux autres de manière à ce que les faces principales de deux éléments accumulateurs adjacents soient en regard. Dans l'exemple illustré, le nombre d'éléments accumulateurs 12 est égal à onze. Bien entendu, il est possible de prévoir un nombre différent d'éléments accumulateurs en fonction de l'énergie électrique à délivrer.

Chaque élément accumulateur 12 comporte une enveloppe 14 d'encapsulation extérieure à l'intérieur de laquelle sont disposées une cathode et une anode séparées par un électrolyte (non représentés). L'électrolyte peut être par exemple un électrolyte aprotique dans le cas d'un élément accumulateur du type lithium-ion ou encore un séparateur polymère à membrane dans le cas d'un élément accumulateur du type lithium-ion polymère.

L'enveloppe 14 d'encapsulation comporte une zone de fermeture 16 scellée d'épaisseur réduite comprenant un bord libre à partir duquel s'étendent transversalement par rapport à l'axe X-X' des électrodes 18 positive et 20 négative de connexion. Les électrodes 18, 20 de connexion sont espacées transversalement l'une par rapport à l'autre. Elles se présentent sous la forme de languettes et sont réalisées à partir de fines feuilles métalliques présentant une épaisseur inférieure à celles de la zone de fermeture 16.

Dans l'exemple de réalisation illustré, les éléments accumulateurs 12 d'énergie électrique sont agencés de manière à disposer alternativement les électrodes 18 positives et 20 négatives, en considérant l'axe X-X' d'empilage, de sorte que l'électrode positive, respectivement négative, d'un élément accumulateur soit axialement en regard et adjacent de l'électrode négative, respectivement positive, de l'élément accumulateur immédiatement adjacent situé au-dessous et/ou au-dessus.

Afin de relier électriquement les différents éléments accumulateurs 12, l'ensemble 10 comprend des entretoises 22 conductrices et des entretoises 24 isolantes disposées axialement entre les électrodes 18, 20 de connexion alignées axialement. Les entretoises 22 sont formées dans un matériau électriquement conducteur, par exemple en matière métallique telle que l'aluminium ou toute autre matière appropriée. Les entretoises 22 sont formées dans un matériau isolant, par exemple en matière synthétique ou toute autre matière appropriée.

Comme cela sera décrit par la suite, l'ensemble 10 comprend des moyens permettant de s'assurer du maintien de la connexion électrique entre les électrodes 18, 20 de connexion des éléments accumulateurs 12.

Dans l'exemple de réalisation illustré, entre deux éléments accumulateurs 12 axialement adjacents sont disposées une entretoise 22 conductrice et une entretoise 24 isolante, à l'exception de l'élément accumulateur supérieur de l'empilement et de l'élément accumulateur inférieur adjacent. En effet, entre ces deux éléments, il est prévu seulement une entretoise isolante entre l'électrode 18 positive de l'élément accumulateur 12 supérieur et l'électrode 20 négative de l'élément inférieur adjacent, les deux autres électrodes 20, 18 de ces deux éléments étant directement en contact l'une contre l'autre.

Les entretoises 22 conductrices sont montées axialement entre l'électrode 18 positive d'un élément accumulateur et l'électrode 20 négative de l'élément accumulateur adjacent supérieur. Les entretoises isolantes 24 sont montées axialement entre l'électrode 20 négative d'un élément accumulateur et l'électrode 18 positive de l'élément accumulateur adjacent supérieur. Les entretoises 22 conductrices et 24 isolantes sont disposées alternativement le long de l'axe X-X'.

En considérant deux éléments accumulateurs 12 adjacents, l'entretoise conductrice 22 est montée en appui contre la face supérieure de l'électrode 18 positive de l'élément accumulateur inférieur et s'étend axialement jusqu'à venir en contact de la face inférieure de l'électrode 20 négative de l'élément accumulateur supérieur. Inversement, l'entretoise 24 isolante est disposée entre la face supérieure de l'électrode 20 négative de l'élément accumulateur inférieur et la face inférieure de l'électrode 18 positive de l'élément accumulateur supérieur en venant axialement en contact contre lesdites faces.

Dans l'exemple de réalisation illustré, les électrodes 18, 20 de connexion et les entretoises 22 conductrices et 24 isolantes sont disposées de manière à monter en série la pluralité d'éléments accumulateurs 12. En variante, il pourrait être possible de prévoir un montage en parallèle des éléments accumulateurs. Dans ce but, il conviendrait d'aligner respectivement les électrodes positives et négatives le long de l'axe d'empilage et de disposer les entretoises de façon appropriée.

Les entretoises 22 conductrices sont identiques entre elles et comportent chacune une base 26 se présentant sous forme de plaque rectangulaire et permettant de relier électriquement les électrodes 18, 20 de deux éléments accumulateurs 12 superposés axialement. Dans ce but, les surfaces inférieure et supérieure de la base 26 sont en contact respectivement contre les électrodes 18 positive et 20 négative de ces éléments accumulateurs 12. Une face avant 26a de la base 26, située du côté opposé aux éléments accumulateurs 12, est prolongée en partie par un talon 28. La base 26 et le talon 28 sont dimensionnés de manière à recouvrir la majeure partie des faces des électrodes 18, 20 associées en restant en retrait ou en affleurant avec les bords périphériques desdites électrodes. Une face arrière 26b de la base 26 reste à distance de la zone de fermeture 16 des éléments accumulateurs 12 associés.

Chaque entretoise 22 comporte un évidement 30 traversant ménagé dans le talon 28 et s'étendant transversalement à l'axe X-X' en étant parallèle à la face avant 26a de la base 26. L'évidement 30 est prévu pour le montage d'une fiche de connexion reliée à un câble électrique 31 (représenté partiellement) pour une mesure de tension. La fiche de connexion de chaque câble électrique 31 forme une fiche mâle apte à être montée à l'intérieur de l'évidement 30 associé formant prise femelle.

Les entretoises 24 comportent des premier et second sous-groupes d'entretoises 24a, 24b isolantes. Les entretoises 24a isolantes sont identiques et se présentent sous forme de plaques rectangulaires d'épaisseur mince. Elles sont au nombre de deux. La surface inférieure de l'une de ces entretoises 24a est montée indirectement contre la face supérieure de l'électrode 20 négative de l'élément accumulateur 12 inférieur de l'empilement, comme cela sera décrit par la suite. La surface supérieure de cette entretoise est montée en contact contre la face inférieure de l'électrode 18 positive de l'élément accumulateur situé axialement au-dessus. L'entretoise 24 permet de réaliser une isolation électrique de ces deux électrodes. L'autre entretoise 24a vient en appui contre la face inférieure de l'électrode 18 positive de l'élément accumulateur 12 supérieur de l'empilement et la face supérieure de l'électrode 20 négative de l'élément accumulateur 12 situé axialement au-dessous.

Les entretoises 24b sont montées axialement entre l'électrode 20 négative d'un élément accumulateur et l'électrode 18 positive de l'élément accumulateur adjacent supérieur pour les éléments accumulateurs 12 disposés axialement entre les éléments accumulateurs inférieur et supérieur de l'empilement.

Les entretoises 24b sont identiques entre elles et comportent chacune une base 32 se présentant sous forme de plaque rectangulaire permettant d'isoler électriquement les électrodes 20, 18 des éléments accumulateurs 12 superposés axialement. La base 32 est dimensionnée de manière à recouvrir la majeure partie des faces des électrodes 20 et 18, une face avant 32a de ladite base affleurant sensiblement axialement avec le bord libre avant des électrodes. La face avant 32a de la base 32 est prolongée en partie par un talon 34 s'étendant en saillie par rapport au bord libre avant des électrodes, et plus généralement au-delà des entretoises 22 conductrices. Les talons 34 sont alignés axialement avec les talons 28 des entretoises 22 conductrices. Les talons 34 permettent de s'assurer de l'isolation électrique de l'ensemble 10 accumulateur par rapport à un boîtier de réception (non représenté) de l'ensemble accumulateur.

Chaque entretoise 24b comporte une extension 36 de faible épaisseur s'étendant à partir de la face arrière 32b de la base et prévue pour venir en appui contre l'une des zones de fermeture 16 des éléments accumulateurs associés à l'entretoise. Cette extension 36 permet d'éviter un contact entre les électrodes 20 négative et 18 positive à isoler de deux éléments accumulateurs adjacents, lors d'une éventuelle déformation de l'une ou de ces deux électrodes. En effet, les électrodes 18, 20 étant réalisées sous forme de fines feuilles métalliques, elles peuvent se plier légèrement et venir au contact de l'électrode axialement adjacente, ce qui peut créer un court-circuit. On accroît ainsi la sûreté de fonctionnement de l'ensemble 10 accumulateur.

La disposition du premier sous-groupe d'entretoises 24a relativement aux électrodes 18, 20 et aux enveloppes 14 des éléments accumulateurs 12 associés est similaire à celle qui vient d'être décrite pour le second sous-groupe d'entretoises 24b.

Afin de pouvoir connecter électriquement l'ensemble 10 à un consommateur d'énergie électrique, qui peut avantageusement être la motorisation électrique du véhicule, des attaches 40 supérieure et 42 inférieure sont prévues respectivement pour la fixation de câbles 44, 46 de puissance. L'attache 40 supérieure est montée en appui contre la face supérieure de l'électrode 18 positive de l'élément accumulateur supérieur de l'empilement. L'attache 42 inférieure est montée en contact de la face supérieure de l'électrode 20 négative de l'élément accumulateur inférieur dudit empilement et l'entretoise 24a correspondante. L'entretoise 24a est ainsi montée indirectement en contact contre ladite électrode 20 négative. Les attaches 40, 42 sont réalisées dans un matériau électriquement conducteur.

L'attache 42 inférieure présente une structure identique à celle des entretoises 22 conductrices en présentant toutefois une épaisseur réduite. Une extrémité du câble 46 de puissance est serrée axialement entre l'attache 42 et l'entretoise 24a correspondante. L'attache 40 supérieure présente également une structure proche des entretoises 22 et comporte en outre une extension 40a pour permettre la fixation du câble 44 de puissance.

De façon similaire aux entretoises 22 conductrices, les attaches 40, 42 comportent des évidements prévus pour le montage d'une fiche de connexion reliée à un câble électrique 47. Ces câbles électriques 47 permettent de réaliser une mesure de la tension totale aux bornes de l'ensemble 10 accumulateur. Cette mesure s'effectue entre l'électrode positive 18 de l'élément accumulateur supérieur et l'électrode négative 20 de l'élément accumulateur inférieur de l'empilement.

L'ensemble 10 comprend encore une plaque 48 de structure identique à celle des entretoises 22 conductrices et montée axialement en appui sur la face supérieure de l'électrode 20 négative de l'élément accumulateur 12 supérieur de l'empilement. Cette plaque 48 comporte un évidement prévu pour le montage d'une fiche de connexion reliée à un câble électrique 47 afin de pouvoir réaliser une mesure de la tension de l'élément accumulateur 12 supérieur de l'empilement.

Pour assurer la fixation des électrodes 18, 20 des éléments accumulateurs relativement aux entretoises 22 conductrices et 24 isolantes, l'ensemble 10 comprend des flasques d'extrémité 50 supérieur, 52 inférieur et des tirants 54 d'assemblage coopérant avec les flasques d'extrémité pour enserrer axialement les entretoises et électrodes de connexion.

Le flasque d'extrémité 50 supérieur comporte une première plaque d'appui 56 montée axialement en contact contre la surface supérieure de l'attache 40 et prolongée perpendiculairement au niveau d'un bord latéral par une patte 56a s'étendant axialement vers le bas. La patte 56a présente une dimension axiale telle que, dans la position assemblée des éléments accumulateurs 12, son extrémité inférieure est située axialement au-dessous de l'électrode 18 positive de l'élément accumulateur inférieur de l'empilement, sensiblement au niveau du flasque d'extrémité 52 inférieur. La patte 56a s'étend au voisinage des électrodes 18, 20 et entretoises 22, 24 empilées axialement du côté extérieur de l'empilement, i.e. du côté opposé à l'autre empilage d'électrodes et d'entretoises. La patte 56a forme une protection ou barrière permettant de s'assurer de l'isolation électrique de l'ensemble 10 par rapport à son boîtier de réception.

Le flasque d'extrémité 50 comporte également une seconde plaque d'appui 58 venant axialement en contact contre la surface supérieure de la plaque 48, et des contre-plaques 60, 62 venant respectivement axialement en contact contre les surfaces supérieures des plaques d'appui 56, 58. Un bord latéral de la plaque d'appui 58 est prolongé par une patte 58a axiale symétrique à la patte 56a en considérant un plan médian axial des éléments accumulateurs 12. La patte 58a s'étend axialement vers le bas et son extrémité inférieure est située axialement au niveau du flasque d'extrémité 52 inférieur dans la position assemblée des éléments accumulateurs 12. Les plaques d'appui 56, 58 sont réalisées dans un matériau isolant.

Le flasque d'extrémité 52 inférieur comporte des première et seconde plaques d'appui 64, 66 venant respectivement en contact contre les faces inférieures des électrodes positive 18 et négative 20 de l'élément accumulateur 12 inférieur de l'empilement. La plaque d'appui 64 comporte une patte 65 de support élastique prévue pour la fixation d'un connecteur 35 sur lequel sont fixées les extrémités des câbles électriques 31, 47. Une carte de circuit imprimé peut être branchée sur le connecteur pour réaliser la mesure de la tension de chaque élément accumulateur 12 et la mesure de la tension totale aux bornes de l'ensemble 10. Un bord latéral de la plaque d'appui 66 est prolongé par une patte 67 axiale s'étendant vers le haut à travers l'espace transversal situé entre les deux empilages axiaux d'électrodes 18, 20 de connexion et des entretoises 22, 24. L'extrémité supérieure de la patte 67 axiale est située axialement au niveau de la plaque d'appui 58 du flasque d'extrémité 50 supérieur dans la position assemblée des éléments accumulateurs 12.

Le flasque d'extrémité 52 comporte également des contre-plaques 68, 69 venant respectivement en appui contre les surfaces inférieures des plaques d'appui 64, 66.

Les tirants 54 d'assemblage traversent axialement l'empilement d'électrodes 18, 20 et d'entretoises 22, 24 pour les enserrer axialement entre les flasques d'extrémité 50, 52. Pour permettre le montage des tirants 54 d'assemblage, les électrodes 18 et 20 de connexion, les entretoises 22 et 24, les attaches 40 et 42, la plaque 48, les plaques d'appui 56, 58, 64, 66 et les contre-plaques 60, 62, 68, 69 comportent des évidements traversants alignés axialement. Dans l'exemple de réalisation illustré, trois évidements sont prévus sur chacun de ces organes.

Les tirants 54 d'assemblage sont identiques entre eux et au nombre de six. Chaque tirant 54 comporte une partie mâle comportant une tige 70 filetée, s'étendant axialement et munie, à son extrémité supérieure, d'une tête 72 de serrage comportant un trou taraudé de manière à permettre l'insertion d'une clé en vue du vissage. Chaque tirant 54 comporte également une partie femelle comprenant une portion de montage 74 cylindrique munie intérieurement d'un filetage correspondant à celui de la tige 70. L'extrémité inférieure de la partie de montage 74 comporte une tête 76 d'appui venant en contact contre la contre-plaque 68, 69 correspondante du flasque d'extrémité 52 inférieur. Le vissage des tiges 70 filetées dans les portions de montage 74 permet aux flasques d'extrémité 50, 52 d'enserrer axialement les entretoises 22, 24 isolantes et les électrodes 18, 20 et d'obtenir un contact axial entre elles afin de réaliser la connexion électrique des éléments accumulateurs 12 empilés.

Des manchons 78 d'isolation sont prévus pour le montage des tiges 70 filetées et des portions de montage 74 à l'intérieur des évidements pratiqués sur les électrodes 18 et 20 de connexion, les entretoises 22 et 24, la plaque 48, les attaches 40 et 42, les plaques d'appui 56, 58, 64, 66 et les contre-plaques associées. Les manchons 78 d'isolation sont interposés entre les tirants 54 d'assemblage et ces évidements afin d'isoler électriquement les tirants. Dans ce but, les manchons 78 sont réalisés dans un matériau électriquement isolant, par exemple en silicone.

Afin de s'assurer du maintien du contact axial entre les électrodes 18, 20 des éléments accumulateurs et les entretoises 22 et 24, l'ensemble 10 comporte des moyens de précontrainte 80 élastiques disposés chacun autour d'une des tiges 70 des tirants 54 d'assemblage et montés axialement en contact de la tête 72 de serrage associée et de la contre-plaque 60, 62 correspondante du flasque d'extrémité 50. Les moyens de précontrainte 80 sont identiques entre eux et se présentent chacun sous la forme d'une rondelle annulaire à section rectangulaire à l'état libre. Les rondelles peuvent par exemple être des rondelles du type Belleville ou à plateau. Alternativement, il est possible d'utiliser tout autre moyen de précontrainte élastique à élasticité axiale apte à exercer un effort de précontrainte axiale.

Après serrage des tirants 54 d'assemblage, les moyens de précontrainte 80 sont aptes à exercer des efforts axiaux sur le flasque d'extrémité 50 supérieur de manière à appliquer une précontrainte axiale sur les électrodes 18, 20 des éléments accumulateurs et les entretoises 22, 24. On assure ainsi un jeu axial nul entre les deux empilages axiaux d'électrodes 18, 20 et d'entretoises de connexion garantissant une bonne connexion électrique des différents éléments accumulateurs 12. En outre, les moyens de précontrainte 80 permettent d'appliquer, entre les électrodes 18, 20 et les entretoises 22, 24, une pression de contact globalement uniforme au cours du temps.

A chaque tirant 54 d'assemblage est associé le même nombre de moyens de précontrainte 80. Dans l'exemple de réalisation illustré, un unique moyen de précontrainte 80 est prévu entre la tête 72 de serrage de chaque tirant 54 et le flasque d'extrémité 50 supérieur. En variante, il pourrait être possible de prévoir, en remplacement ou en association du moyen de précontrainte 80 associé à chaque tirant 54, un moyen de précontrainte prévu axialement entre la tête 76 d'appui et le flasque d'extrémité 52 inférieur. Il pourrait également être envisageable d'associer plusieurs moyens de précontrainte empilés axialement entre la tête 72, 76 du tirant d'assemblage et le flasque d'extrémité correspondant, en conservant toutefois le même nombre de moyens de précontrainte pour chaque tirant 54.

L'ensemble 10 comprend encore avantageusement des sondes de mesure de la température des éléments accumulateurs 12. Une première sonde 82 est fixée sur la face supérieure de l'élément accumulateur supérieur de l'empilement, une seconde sonde pouvant être fixée sur un élément accumulateur situé par exemple à mi-hauteur de l'empilement. La fixation des sondes de mesure peut être réalisée par collage. Les sondes sont reliées au connecteur 35 par des câbles (non représentés).

Afin d'isoler individuellement les éléments accumulateurs 12 les uns par rapport aux autres, une bande isolante (non représentée) est prévue lors du montage des différents éléments accumulateurs 12. Dans un premier temps, la bande isolante est fixée sur l'élément accumulateur 12 inférieur et enroulée autour de celui-ci de manière à recouvrir entièrement son enveloppe 14 extérieure. Ensuite, lors de l'empilage progressif des éléments accumulateurs 12, la bande isolante est mise en place de manière à zigzaguer ou serpenter entre les éléments accumulateurs 12 empilés de sorte que, pour chaque élément accumulateur disposé entre l'élément accumulateur inférieur et l'élément accumulateur supérieur de l'empilement, les faces principales opposées de l'enveloppe 14 extérieure sont recouvertes par la bande isolante. Pour l'élément accumulateur 12 supérieur, la bande isolante entoure entièrement l'enveloppe 14 extérieure. Les éléments accumulateurs 12 sont donc empilés les uns contre les autres avec interposition d'une bande isolante entre deux éléments accumulateurs adjacents. A titre indicatif, la bande isolante peut se présenter sous la forme d'un film de polyamide présentant une largeur de 200 mm et une épaisseur de 0,125 mm.

Pour maintenir fixement les éléments accumulateurs 12 les uns par rapport aux autres, des colliers 84 de serrage sont prévus autour de l'empilage d'éléments accumulateurs 12. Deux bandes 86 de mousse sont également collées sur la portion de bande isolante recouvrant la face supérieure de l'élément accumulateur 12 supérieur de l'empilement.

Dans l'exemple de réalisation illustré, l'électrode 20 négative de l'élément accumulateur 12 supérieur vient directement en contact avec l'électrode 18 positive de l'élément accumulateur inférieur adjacent. Pour les autres électrodes 18, 20 de connexion axialement superposées, une entretoise conductrice ou isolante est interposée entre deux électrodes immédiatement successives. Il pourrait toutefois être possible, sans sortir du cadre de la présente invention, de prévoir un contact axial direct entre d'autres électrodes positives et négatives axialement adjacentes en prévoyant un agencement adapté des entretoises pour conserver la connexion électrique souhaitée des éléments accumulateurs 12.

## Revendications

1. Ensemble accumulateur comprenant une pluralité d'éléments accumulateurs (12) d'énergie électrique superposés selon un axe d'empilage et comprenant chacun des électrodes (18, 20) de connexion, des entretoises (22, 24) disposées axialement entre au moins certaines desdites électrodes de connexion, et des tirants d'assemblage (54) s'étendant axialement à travers des évidements des électrodes de connexion et des entretoises, **caractérisé en ce qu'**il comprend des flasques d'extrémité (50, 52) coopérant avec les tirants d'assemblage pour enserrer axialement les électrodes de connexion et les entretoises, et des moyens de précontrainte (80) élastiques coopérant avec au moins un des flasques d'extrémité pour exercer des efforts axiaux de précontrainte sur les électrodes de connexion et les entretoises empilées.

2. Ensemble selon la revendication 1, dans lequel les moyens de précontrainte (80) sont disposés axialement entre une tête (72) des tirants d'assemblage et le flasque d'extrémité correspondant.

3. Ensemble selon les revendications 1 ou 2, dans lequel les moyens de précontrainte comprennent chacun au moins une rondelle annulaire à élasticité axiale.

4. Ensemble selon l'une quelconque des revendications précédentes, dans lequel les entretoises (22, 24) sont disposées axialement entre les électrodes de connexion des éléments accumulateurs adjacents.

5. Ensemble selon l'une quelconque des revendications précédentes, comprenant des entretoises (22) conductrices électriquement.

6. Ensemble selon la revendication 5, comprenant en outre des entretoises (24) isolantes.

7. Ensemble selon la revendication 6, dans lequel les éléments accumulateurs (12) d'énergie électrique sont montés de manière à disposer alternativement les électrodes positives (18) et négatives (20) de connexion le long de l'axe d'empilage de sorte qu'une électrode positive d'un élément accumulateur soit axialement adjacente d'une électrode négative d'un élément accumulateur adjacent, les entretoises isolantes et conductrices étant agencées pour connecter en série la pluralité d'éléments accumulateurs.

8. Ensemble selon la revendication 7, dans lequel les entretoises (24) isolantes comportent une base (32) contre laquelle vient en appui au moins une électrode de connexion de deux éléments accumulateurs axialement adjacents, et une extension (36) en contact avec une enveloppe (14) extérieure d'au moins un desdits éléments accumulateurs.

9. Ensemble selon l'une quelconque des revendications 6 à 8, dans lequel les entretoises (24) isolantes s'étendent au moins en partie en saillie par rapport aux électrodes (18, 20) de connexion et aux entretoises (22) conductrices du côté opposé aux éléments accumulateurs (12).

10. Ensemble selon l'une quelconque des revendications 5 à 9, dans lequel les entretoises (22) conductrices comportent chacune un évidement (30) à l'intérieur duquel est branchée une fiche de connexion reliée à un câble électrique.

11. Ensemble selon l'une quelconque des revendications précédentes, comprenant des manchons d'isolation (78) pour le montage des tirants d'assemblage (54) à travers les évidements des électrodes de connexion et des entretoises.

12. Ensemble selon l'une quelconque des revendications précédentes, dans lequel les tirants d'assemblage comportent une partie mâle comportant une tige (70) filetée et une tête (72) de serrage, et une partie femelle comportant une portion de montage (74) à l'intérieur de laquelle est vissée la tige filetée et une tête (76) d'appui en contact contre un des flasques d'extrémité.

13. Ensemble selon l'une quelconque des revendications précédentes, comprenant des moyens de maintien (84) en position des éléments accumulateurs distincts des tirants d'assemblage (54).

14. Ensemble selon l'une quelconque des revendications précédentes, comprenant des moyens d'isolation pour isoler individuellement les éléments accumulateurs (12) d'énergie électrique.

15. Ensemble selon la revendication 14, dans lequel les moyens d'isolation comprennent une bande isolante continue serpentant entre les éléments accumulateurs de manière à recouvrir au moins deux faces opposées de chaque élément.

## Patentansprüche

1. Akkumulatoranordnung, welche aufweist: mehrere Speicherelemente (12) für Elektroenergie, die entlang einer Stapelachse übereinander angeordnet sind und jeweils Verbindungselektroden (18, 20) aufweisen, Distanzstücke (22, 24), die axial zwischen mindestens einigen der Verbindungselektroden angeordnet sind, und Zugstange (54), die sich axial durch Aussparungen der Verbindungselektroden und der Distanzstücke hindurch erstrecken, **dadurch gekennzeichnet, dass** sie Endstücke (50, 52), die mit den Zugstangen zusammenwirken, um die Verbindungselektroden und die Distanzstücke axial zu umklammern, und elastische Vorspannmittel (80), die mit mindestens einem der Endstücke zusammenwirken, um axiale Vorspannkräfte auf die Verbindungselektroden und die gestapelten Distanzstücke auszuüben, aufweist.

2. Anordnung nach Anspruch 1, wobei die Vorspannmittel (80) axial zwischen einem Kopf (72) der Zugstangen und dem entsprechenden Endstück angeordnet sind.

3. Anordnung nach Anspruch 1 oder 2, wobei die Vorspannmittel jeweils mindestens eine ringförmige Scheibe mit axialer Elastizität aufweisen.

4. Anordnung nach einem der vorhergehenden Ansprüche, wobei die Distanzstücke (22, 24) axial zwischen den Verbindungselektroden der benachbarten Speicherelemente angeordnet sind.

5. Anordnung nach einem der vorhergehenden Ansprüche, welche elektrisch leitende Distanzstücke (22) aufweist.

6. Anordnung nach Anspruch 5, welche außerdem isolierende Distanzstücke (24) aufweist.

7. Anordnung nach Anspruch 6, wobei die Speicherelemente (12) für Elektroenergie derart angebracht sind, dass abwechselnd die positiven (18) und negativen (20) Verbindungselektroden entlang der Stapelachse angeordnet sind, so dass eine positive Elektrode eines Speicherelements einer negativen Elektrode eines benachbarten Speicherelements axial benachbart ist, wobei die isolierenden und leitenden Distanzstücke dazu eingerichtet sind, die mehreren Speicherelemente in Reihe zu schalten.

8. Anordnung nach Anspruch 7, wobei die isolierenden Distanzstücke (24) einen Basisteil (32), an dem mindestens eine Verbindungselektrode zweier axial benachbarter Speicherelemente zur Anlage kommt, und eine Verlängerung (36), die sich mit einer äußeren Hülle (14) mindestens eines der Speicherelemente in Kontakt befindet, aufweisen.

9. Anordnung nach einem der Ansprüche 6 bis 8, wobei sich die isolierenden Distanzstücke (24) auf der zu den Speicherelementen (12) entgegengesetzten Seite wenigstens teilweise vorspringend in Bezug auf die Verbindungselektroden (18, 20) und die leitenden Distanzstücke (22) erstrecken.

10. Anordnung nach einem der Ansprüche 5 bis 9, wobei die leitenden Distanzstücke (22) jeweils eine Vertiefung (30) aufweisen, in deren Innerem ein Verbindungsstecker angeschlossen ist, der mit einem Stromkabel verbunden ist.

11. Anordnung nach einem der vorhergehenden Ansprüche, welche Isoliermuffen (78) für die Anbringung der Zugstange (54) durch die Aussparungen der Verbindungselektroden und der Distanzstücke hindurch aufweist.

12. Anordnung nach einem der vorhergehenden Ansprüche, wobei die Zugstangen einen Steckteil, der einen Gewindestab (70) und einen Spannkopf (72) aufweist, und einen Aufnahmeteil, der einen Montageabschnitt (74), in den der Gewindestab hineingeschraubt ist, und einen mit einem der Endstücke in Kontakt befindlichen Stützkopf (76) aufweist, aufweisen.

13. Anordnung nach einem der vorhergehenden Ansprüche, welche Mittel zum Halten (84) der Speicherelemente in ihrer Position aufweist, die von den Zugstangen (54) verschieden sind.

14. Anordnung nach einem der vorhergehenden Ansprüche, welche Isoliermittel zum separaten Isolieren der Speicherelemente (12) für Elektroenergie aufweist.

15. Anordnung nach Anspruch 14, wobei die Isoliermittel ein zusammenhängendes Isolierband aufweisen, das sich zwischen den Speicherelementen hindurchwindet, derart, dass es mindestens zwei gegenüberliegende Seiten jedes Elements bedeckt.

## Claims

1. Accumulator assembly comprising a plurality of electrical energy accumulator elements (12) superimposed along a stacking axis, each element comprising connecting electrodes (18, 20), spacers (22, 24) positioned axially between at least some of said connecting electrodes, and assembly bars (54) extending axially through the apertures in the connecting electrodes and in the spacers, **characterized in that** it comprises end plates (50, 52) which interact with the assembly bars to clamp the connecting electrodes and the spacers axially, and resilient prestressing means (80) which interact with at least one of the end plates to exert axial prestressing forces on the stacked connecting electrodes and spacers.

2. Assembly according to Claim 1, wherein the prestressing means (80) are positioned axially between a head (72) of each assembly bar and the corresponding end plate.

3. Assembly according to Claim 1 or 2, wherein each of the prestressing means comprises at least one axially resilient annular washer.

4. Assembly according to any of the preceding claims, wherein the spacers (22, 24) are placed axially between the connecting electrodes of adjacent accumulator elements.

5. Assembly according to any of the preceding claims, comprising electrically conductive spacers (22).

6. Assembly according to Claim 5, further comprising insulating spacers (24).

7. Assembly according to Claim 6, wherein the electrical energy accumulator elements (12) are assembled in such a way that the positive (18) and negative (20) electrodes are positioned alternately along the stacking axis, so that a positive electrode of one accumulator element is axially adjacent to a negative electrode of an adjacent accumulator element, the insulating and conductive spacers being arranged to connect the plurality of accumulator elements in series.

8. Assembly according to Claim 7, wherein the insulating spacers (24) each comprise a base (32) against which at least one connecting electrode of two axially adjacent accumulator elements bears, and an extension (36) in contact with an outer casing (14) of at least one of said accumulator elements.

9. Assembly according to any of Claims 6 to 8, wherein the insulating spacers (24) extend at least partially so as to project, relative to the connecting electrodes (18, 20) and the conductive spacers (22), on the side opposite the accumulator elements (12).

10. Assembly according to any of Claims 5 to 9, wherein the conductive spacers (22) each comprise an aperture (30) inside which a connecting plug connected to an electrical wire is connected.

11. Assembly according to any of the preceding claims, comprising insulating sleeves (78) for mounting the assembly bars (54) through the apertures of the connecting electrodes and the spacers.

12. Assembly according to any of the preceding claims, wherein the assembly bars each include a male part including a threaded rod (70) and a clamping head (72), and a female part including a mounting portion (74) into which the threaded rod is screwed and a bearing head (76) in contact with one of the end plates.

13. Assembly according to any of the preceding claims, comprising means (84) for keeping the accumulator elements in position which are separate from the assembly bars (54).

14. Assembly according to any of the preceding claims, comprising insulating means for insulating the electrical energy accumulator elements (12) individually.

15. Assembly according to Claim 14, wherein the insulating means comprise a continuous insulating strip zigzagging between the accumulator elements so as to cover at least two opposite faces of each element.
